# EUROPEAN PATENT APPLICATION

(11) **EP 4 534 335 A1**
(43) Date of publication of application: **09.04.2025**
(21) Application number: 23201222.9
(22) Date of filing: 02.10.2023
(51) Int. Cl.: B60L 53/36, B60L 53/37, B60L 53/18, B60L 53/16

(54) **DRIVER ASSISTANCE SYSTEM**

(71) Applicant: Harman Becker Automotive Systems GmbH, 76307 Karlsbad (DE)
(72) Inventor: SRIDHAR, Vikram, 81245 Muenchen (DE)
(74) Representative: Westphal, Mussgnug & Partner, Patentanwälte mbB

(57) **Abstract**

A method comprises, in response to identifying a parking spot having a charging station for electric or hybrid vehicles, retrieving first information concerning a location of a charging port on a vehicle, retrieving second information concerning a position of the charging station with respect to the identified parking spot, and retrieving third information concerning a length of a charging cable of the charging station. The method further comprises, based on the first, second, and third information, determining one or more suitable positions of the vehicle on the identified parking spot with respect to the charging station that allow the vehicle to be connected to the charging station by means of the charging cable, and presenting at least one of the one or more suitable positions of the vehicle to a driver of the vehicle.

## Description

### TECHNICAL FIELD

The disclosure relates to a driver assistance system and related method.

### BACKGROUND

Driver assistance can include any support that is provided to a driver of a vehicle with the aim of increasing personal safety and enhancing driver experience. Electric or hybrid vehicles of different makes or models have their charging ports at entirely different locations on the exterior of the vehicle. Further, charging stations may be arranged differently at different parking spots. The charging stations of different manufacturers may even provide different cable lengths. Therefore, it may be challenging for a driver of a vehicle to choose an appropriate parking spot as well as to position the vehicle correctly with respect to the charging station.

There is a need for a driver assistance system and a method that increase driver comfort and assist a driver in positioning an electric or hybrid vehicle correctly with respect to a charging station.

### SUMMARY

The driver assistance system and related method according to the various embodiments described herein provide guidance for drivers of electric or hybrid vehicles in order to assist the drivers in positioning the electric or hybrid vehicle correctly with respect to a charging station such that a charging cable of the charging station may be easily connected to a charging port of the vehicle without damaging the vehicle or the charging station, and without the driver of the vehicle having to reposition the vehicle.

A method includes, in response to identifying a parking spot with a charging station for electric or hybrid vehicles, retrieving first information concerning a position of a charging port of a vehicle, retrieving second information concerning a position of the charging station with respect to the identified parking spot, and retrieving third information concerning a length of a charging cable of the charging station, based on the first, second, and third, information, determining one or more suitable positions of the vehicle on the identified parking spot with respect to the charging station that allow the vehicle to be connected to the charging station by means of the charging cable, and presenting at least one of the one or more suitable positions of the vehicle to a driver of the vehicle.

A driver assistance system for an electric vehicle includes a controller, the controller being configured, in response to identifying a parking spot with a charging station for electric or hybrid vehicles, to retrieve first information concerning a position of a charging port of the vehicle, retrieve second information concerning a position of a charging station with respect to the identified parking spot, and retrieve third information concerning a length of a charging cable of the charging station, based on the first, second, and third, information, determine one or more suitable positions of the vehicle on the identified parking spot with respect to the charging station that allow the vehicle to be connected to the charging station by means of the charging cable, and present at least one of the one or more suitable positions of the vehicle to a driver of the vehicle.

Other systems, features and advantages of the disclosure will be or will become apparent to one with skill in the art upon examination of the following detailed description and figures. It is intended that all such additional systems, methods, features and advantages included within this description be within the scope of the invention and be protected by the following claims.

### BRIEF DESCRIPTION OF THE DRAWINGS

The arrangements and methods may be better understood with reference to the following description and drawings. The components in the figures are not necessarily to scale, emphasis instead being placed upon illustrating the principles of the invention. Moreover, in the figures, the same reference numerals designate the same components throughout the different views.
Figure 1 schematically illustrates different possible positions of a charging port of an electric or hybrid vehicle.
Figure 2 schematically illustrates a possible arrangement of charging stations for electric or hybrid vehicles on a parking lot.
Figure 3 schematically illustrates another possible arrangement of charging stations for electric or hybrid vehicles and on a parking lot.
Figure 4 schematically illustrates an even further possible arrangement of charging stations for electric or hybrid vehicles on a parking lot.
Figure 5 schematically illustrates a method according to embodiments of the disclosure.
Figure 6 schematically illustrates an even further possible arrangement of charging stations for electric or hybrid vehicles on a parking lot.
Figure 7 schematically illustrates another method according to embodiments of the disclosure.
Figure 8 schematically illustrates a driver assistance system according to embodiments of the disclosure.
Figure 9, including Figures 9A to 9C, schematically illustrate different steps of a method according to embodiments of the disclosure.
Figure 10 schematically illustrates an exemplary illustration of a vehicle on a parking spot.
Figure 11 schematically illustrates different components of a charging station and vehicle required for charging the vehicle.

### DETAILED DESCRIPTION

The driver assistance system and related method according to the various embodiments described herein assist a driver of an electric or hybrid vehicle in positioning the electric or hybrid vehicle correctly with respect to a charging station such that a charging cable of the charging station may be easily connected to a charging port of the vehicle without damaging the vehicle or the charging station, and without the driver of the vehicle having to reposition the vehicle. The driver assistance system and related method may further assist the driver in identifying and/or choosing an available parking spot and related charging station.

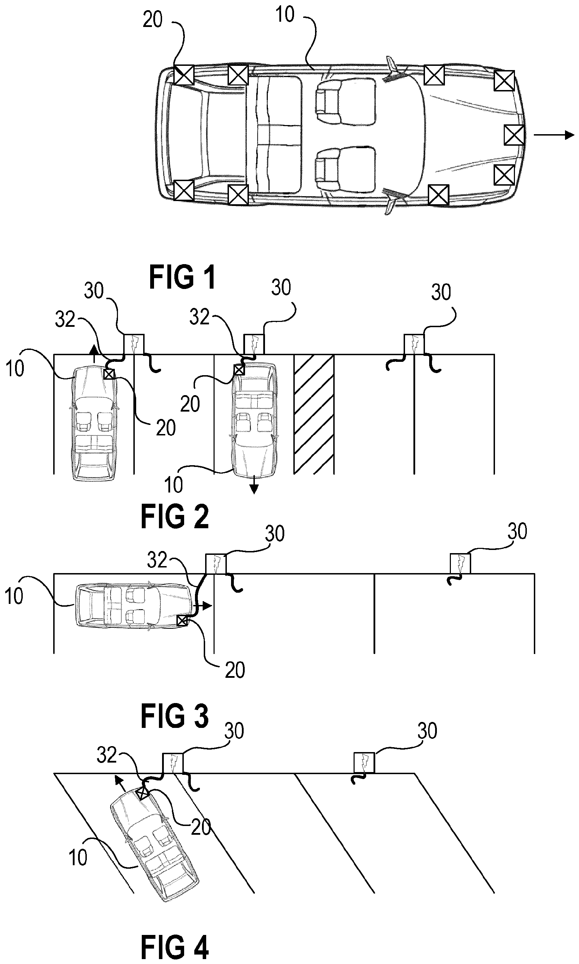

Figure 1 schematically illustrates an electric or hybrid vehicle 10 having a charging port 20. An electric or hybrid vehicle 10 generally has only one charging port 20. There is, however, no standard as to where on a vehicle a charging port should be positioned. The location of the charging port 20, therefore, may significantly differ between vehicles of different manufacturers or even between different models of the same manufacturer. Some vehicles 10, for example, have the charging port 20 positioned at the front of the vehicle 10 (front of vehicle indicated by means of an arrow in the figures), wherein some vehicles 10 have the charging port arranged at a front left or front right corner of the vehicle 10, while others have the charging port 20 arranged in a central position at the front of the vehicle 10. Some vehicles 10 have the charging port 20 arranged anywhere along the sides (left or right) of the vehicle 10, while other vehicles even have the charging port 20 arranged at the rear of the vehicle 10. Several different positions of a charging port 20 are schematically illustrated in Figure 1. The different locations exemplarily indicated in Figure 1, however, are merely examples. Generally, it is possible for the charging port 20 to be arranged at any location on the vehicle.

When parking a vehicle 10 on a parking spot with a charging station 30, a driver of the vehicle 10 needs to keep in mind the position of the charging port 20. When positioning a vehicle 10 with respect to a charging station 30, another difficulty derives from the fact that the charging stations 30 of different manufacturers often also differ from each other. That is, a length of a related charging cable 32 may vary between different charging stations 30. The charging stations 30 may also be positioned in different ways with respect to a parking spot. Depending on the orientation and dimensions of a specific parking spot, the position of the charging station 30 with respect to the parking spot, the length of the charging cable 32, and the position of the charging port 20, it may not be possible to connect the charging cable 32 to the charging port 20 if the vehicle 10 is not positioned correctly.

This is schematically illustrated in Figures 2, 3 and 4. In Figure 2, parking spots are indicated that are arranged perpendicular with respect to the respective charging stations 30. Some charging stations 30 provide more than one charging cable 32 and may thus be able to charge more than one vehicle at a time. Other charging stations 30 may only provide one charging cable 32 and can only charge one vehicle at a time. As is schematically illustrated, vehicles 10 having their charging port 20 at the front may be best positioned with their front towards the charging station 30, while vehicles 10 having their charging port 20 at their back may be best positioned with their back towards the charging station 30 (front of vehicle 10 indicated by means of an arrow). In Figure 3, parking spots are indicated that are arranged in parallel to the charging stations 30, while Figure 4 schematically illustrates parking spots that are arranged diagonally. Similar to what is described with respect to Figure 2, in some cases it may be preferable to position the vehicle 10 with its front facing the charging station 30, while in other cases it may be preferable to position the vehicle 10 with its back facing the charging station 30.

The arrangements of Figures 2, 3 and 4 are merely examples for illustrating the difficulties a driver may face when selecting and parking at a charging station 30, especially when the driver is not acquainted with the charging station 30 and/or the vehicle 10. Depending on the specific implementation of the charging station 30 as such, and further depending on the arrangement of the charging station 30 at the parking spot, the length of the charging cable 32, and the position of the charging port 20 on the vehicle 10, some positions of the vehicle 10 on a specific parking spot may allow easily connecting the charging cable 32 to the charging port 20, while other positions may make it difficult, if not impossible, to connect the charging cable 32 to the charging port 20 of the vehicle 10.

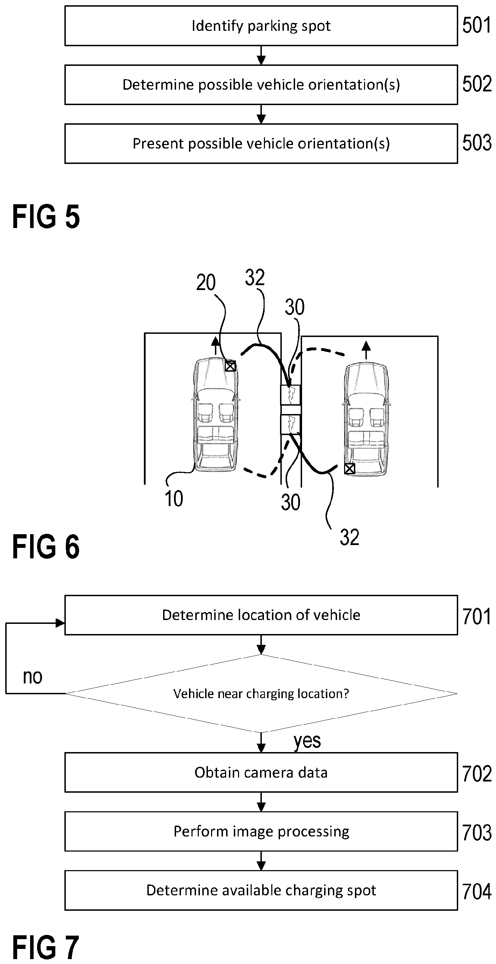

In order to assist a driver in correctly positioning a vehicle 10 with respect to a charging station 30, a method according to embodiments of the disclosure comprises, in response to identifying a parking spot with a charging station 30 for electric or hybrid vehicles (step 501), determining possible vehicle orientations on the parking spot (step 502), and presenting the possible vehicle orientations to a driver of the vehicle 10 (step 503). This is schematically illustrated in the flow chart in Figure 5. The step of determining possible vehicle orientations on the parking spot comprises retrieving first information concerning a position of a charging port 20 of the vehicle 10, retrieving second information concerning a position of a charging station 30 with respect to the identified parking spot, and retrieving third information concerning a length of a charging cable 32 of the charging station 30. Based on the first, second, and third, information, one or more suitable positions of the vehicle 10 on the parking spot with respect to the charging station 30 are determined that allow the vehicle 10 (i.e. the charging port 20 of the vehicle 10) to be connected to the charging station 30 by means of the charging cable 32. In some cases, only one position of the vehicle 10 on the identified parking spot may be possible that allows connecting the vehicle 10 to the charging station 30 by means of the charging cable 32. In other cases, two or more possible positions may be determined.

It is possible for all of a plurality of possible positions to be presented to the driver. The driver may then choose a preferred one of the possible positions. It is, however, also possible that, if more than one possible position is determined, the different possible positions are evaluated and only one position is then presented to the driver. For example, different possible positions may be ranked based on different criteria. For example, only a position may be presented to the driver that is identified as providing the best access to the charging port 20 for the charging cable 32. This may be, for example, a position in which the charging port 20 is arranged closest to the charging station 30. Other criteria, however, may be used alternatively or additionally when determining the most convenient position of a vehicle 10 out of several possible positions. In this context it is also possible to take into consideration, for example, a surrounding environment of the identified parking spot. For example, it may be taken into consideration whether any other vehicles or objects are located adjacent to the parking spot that may block access to the charging port 20 in certain positions. Any other suitable criteria may also be taken into consideration. It is also possible for the specific arrangement of one or more charging stations 30 with respect to one or more parking spot to allow for more than one suitable position of a vehicle 10 on a respective parking spot. This is exemplarily illustrated in Figure 6, where two charging stations 30 are arranged between two parking spots. Each charging station 30 may generally serve both parking spots. A suitable position on one of the parking spots with respect to a first one of the two charging stations 30 may be presented to the driver of a vehicle 10, and/or another suitable position on the same parking spot with respect to a second one of the two charging stations 30 may be presented to the driver, for example.

One or more suitable positions of the vehicle 10 may be presented to a driver of the vehicle 10 in any suitable way. Generally, for example, it is possible to give acoustic guidance to a driver of the vehicle 10. The information about one or more suitable positions of the vehicle with respect to the charging station 30, however, may be very conveniently presented to the driver of the vehicle 10 by presenting it on a display of the vehicle 10, for example. In this way, the identified parking spot and the charging station 30 may be visualized and an illustration of the vehicle 10 may be presented which indicates the optimal parking position of the vehicle 10 on the identified parking spot. In this way, the driver receives clear guidance as to how to park their vehicle 10 on the identified parking spot. It is even possible that such visual presentation be presented to the driver of the vehicle 10 on a display of an external device such as, e.g., a smartphone.

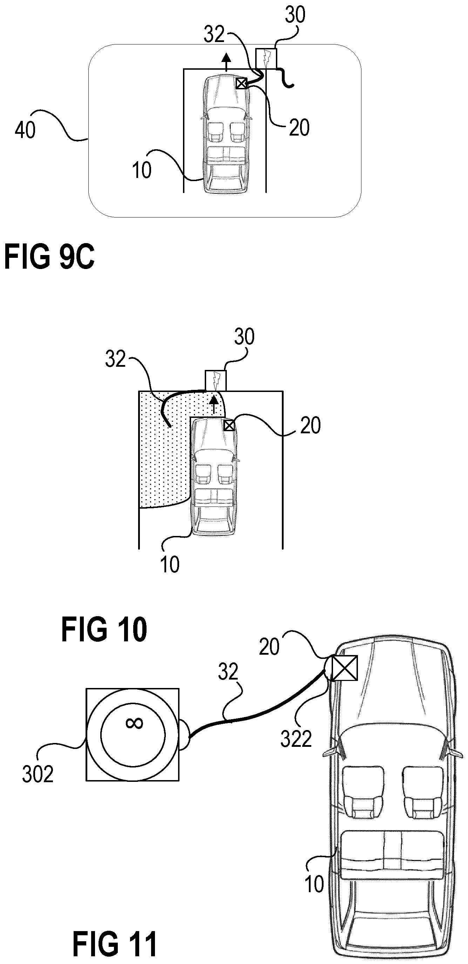

A possible presentation of a vehicle 10 on a parking spot is schematically illustrated in Figure 10. In this illustration, the parking spot and the respective charging station 30 are illustrated on a display. In the exemplary illustration of Figure 10, a dotted area is indicated which indicates an area within which the length of the charging cable 32 suffices to connect the charging port 20 of the vehicle 10 to the charging station 30. In the exemplary illustration of Figure 10, the charging port 20 of the vehicle 10 is outside of the dotted area. That is, if the vehicle 10 is parked on the parking spot with the indicated orientation, it would not be possible to connect it to the charging station 30. In addition to information concerning an area that can be spanned by the charging cable 32, additional information could be presented to the driver of the vehicle 10 such as, e.g., a type of the charging station's outlet 302, a charging cable connector type 322 (the connector 322 of the charging cable 32 being the part of the charging cable 32 that is actually plugged into the charging port 20), a type of the charging port 20 of the vehicle 10 (vehicle inlet), or a power output (of the charging station 30) to the vehicle 10 (see Figure 11). In this way, a driver of the vehicle 10 can gather information about whether the vehicle 10 is compatible with the identified charging station 30. Such information can be retrieved from a navigation system 102 of the vehicle 10, from a cloud, or from an internal memory of the driver assistance system, for example. It is even possible, while presenting a suitable position of the vehicle 10, to further present a distance between the charging port 20 and the charging cable 32 either in graphical form or in absolute values.

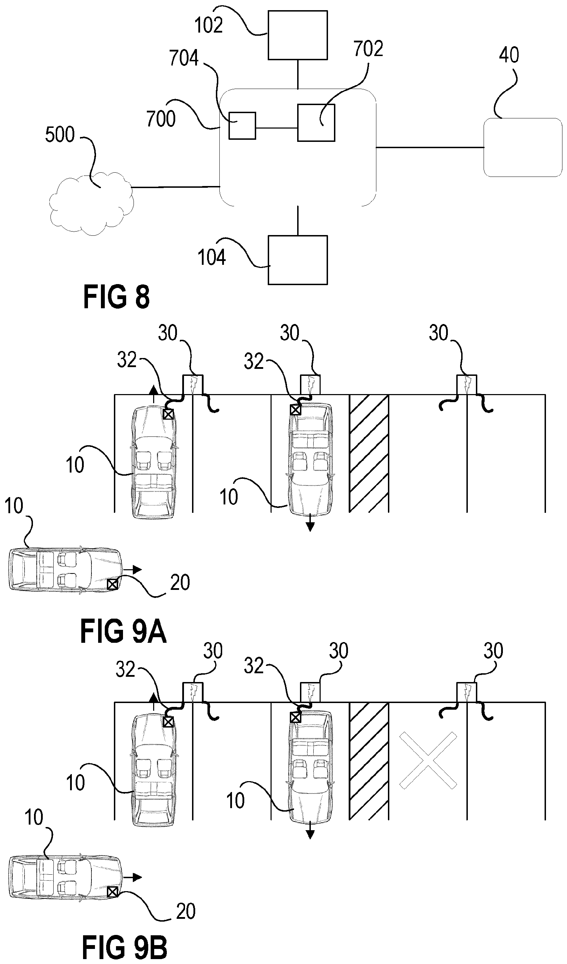

A driver assistance system 700 according to embodiments of the disclosure is schematically illustrated in Figure 8. The driver assistance system (e.g., advanced driver assistance system ADAS) 700 comprises a controller 702 that is configured to perform the steps of the method described above. The driver assistance system 700 further comprises a memory 704. The first information concerning the position of the charging port 20 with respect to the vehicle 10 may be stored in the memory 704 of the driver assistance system 700, for example. The position of the charging port 20 of a vehicle 10 always remains constant and may therefore be easily stored within the driver assistance system 700. The third information concerning a length of a charging cable 32 of the charging station 30 may be retrieved from a navigation system 102 of the vehicle 10, for example, to which the driver assistance system 700 may be connected. Navigation systems 102 often provide information concerning "Points of Interest" to users of the navigation system 102. Points of Interest may generally include, e.g., data concerning charging stations 30, service stations, fuel stations, locations of businesses of interest, landmarks, tourist attractions, etc. Instead of or in addition to providing such information by means of a navigation system 102, it is also possible for the driver assistance system 700 to be in communication with a cloud 500, and that the third information is retrieved from the cloud 500. The third information, in addition to the length of a charging cable 32 of a desired charging station 30, may include further information such as, e.g., a location (e.g., GPS coordinates) of the respective charging station 30, a charging station connector type (e.g., CCS2, NACS, etc.), and/or a maximum power provided by the charging station 30, etc. Should the third information concerning the length of the charging cable 32 for some reason not be available (e.g., connection to cloud 500 failed), a default value (e.g., an average length of known charging cables 32) could be used instead. Such default value can be stored in and retrieved from the memory 704 of the driver assistance system 700, for example.

The driver assistance system 700 may further comprise or be connected to a surround view camera system 104. Retrieving the second information may comprise capturing one or more images of a surrounding environment of the vehicle 10 by means of the surround view camera system 104 and determining the position of the charging station 30 with respect to the selected parking spot by processing the one or more images of the surrounding environment of the vehicle 10. It is, however, also possible, instead of or in addition to this, for such information to be retrieved from a navigation system 102 of the vehicle 10, for example (e.g., "Points of Interest" data provided by navigation system). Some vehicles may not comprise a surround view camera system 104, and may therefore retrieve the second information from other sources. The driver assistance system 700 may further comprise or may be connected to a display 40, wherein presenting at least one of the one or more suitable positions of the vehicle 10 to a driver of the vehicle 10 comprises displaying the at least one of the one or more suitable positions of the vehicle 10 on the display 40. The display 40 may be a display of the vehicle 10 or a display of an external device.

A parking spot may also only be identified as existent. That is, the parking spot does not necessarily have to be free. For example, in certain parking lots or car parks, each of a plurality of parking spots having a charging station may be identical. Possible positions of the vehicle on a parking spot of the specific parking lot or car park may then be presented to the driver, regardless of whether or not a chosen space is available.

It is, however, also possible to identify one or more specific parking spots among a plurality of parking spots. In such cases, identifying a parking spot may comprise, in response to determining one or more available parking spots, presenting the one or more available parking spots to a driver of the vehicle 10. Presenting one or more available parking spots to a driver may comprise presenting information to the driver as to which charging station provider the available parking spots are served by. After one or more available parking spots have been identified, optionally including information about the respective charging station provider, and have been presented to the driver of the vehicle 10, input about the parking spot selected by the driver may also be received. Instead of selecting a particular parking spot, the user may only select a charging station provider, if charging stations 30 of different charging station providers are available. Some drivers may prefer a specific charging station provider over another, e.g., because they are a registered user of one specific provider.

Referring now to Figure 7, determining available parking spots may comprise determining a current location of the vehicle 10 (step 701). A current location (e.g., current GPS coordinates) of the vehicle 10 may be determined by means of navigation data received from a navigation system 102 of the vehicle 10, for example. Based on the current location of the vehicle 10, it may be determined whether the vehicle 10 is within a defined range of one or more charging stations 30, wherein each of the one or more charging stations serves one or more parking spots. The locations of the one or more charging stations 30 within a defined range of the current location of the vehicle 10 may be retrieved from a navigation system 102, or a cloud 500, for example (e.g., from "Points of Interest" data). If the vehicle 10 is determined not to be near a charging station 30, no further action is taken. If it is determined that the vehicle 10 is within a defined range of one or more charging stations 30, one or more images of a surrounding environment of the vehicle 10 may be captured (step 702). The one or more images of the surrounding environment of the vehicle 10 may be captured by means of a surround view camera system 104, for example. The one or more images of the surrounding environment of the vehicle 10 may then be processed (step 703) in order to identify available parking spots served by the one or more charging stations 30 (step 704). This may be done by means of suitable image process techniques, for example.

Now referring to Figures 9A, 9B and 9C, different steps of a method according to embodiments of the disclosure are schematically illustrated. In Figure 9A, a vehicle 10 is shown entering a parking lot. A plurality of charging stations 30 are provided in the parking lot. That is, a driver may generally choose one of various parking spots with charging stations 30. A parking spot may be identified as has been described above (identified parking spot indicated by means of a cross in Figure 9B). One or more different possible positions of the vehicle 10 on the identified parking spot which allow connecting the charging port 20 of the vehicle 10 to the charging cable 32 of the respective charging station 30 may be determined. At least one possible position may be presented to the driver of the vehicle 10, e.g., by displaying it on a display 40 of the vehicle or of an external device (Figure 9C). It is generally possible for a parking position on the parking spot be illustrated on the display 40, as is schematically illustrated in Figure 9C. It is, however, also possible, for specific guidance to be provided to the driver as to how to park the vehicle 10 on the parking spot in the suggested position. For example, trajectories may be shown on the display 40 to guide the driver of the vehicle 10.

However, even without explicitly guiding a driver of the vehicle 10 (e.g., by means of trajectories) while parking the vehicle, other information may also be provided to assist the driver in finding a suitable position for the vehicle 10. For example, a current position of the vehicle 10 on an identified parking spot may be presented to the driver together with additional information (e.g., similar to what is illustrated in Figure 10). That is, the current position of the vehicle 10 with respect to the charging station 30 and to the charging cable 32 may be presented to the driver in real-time. Further indicating, e.g., an area that can be spanned by the charging cable 32, as well as the location of the charging port 20 on the vehicle 10, may help the driver to easily recognize whether the vehicle 10 is moving into a suitable position. Thus, even without explicit commands from the driver assistance system 700 and without any previous user input regarding a selected parking spot, the probability of having to re-park the vehicle into a better position after parking the first time is significantly reduced.

Summarizing the above, a method according to one embodiment of the disclosure comprises, in response to identifying a parking spot with a charging station 30 for electric or hybrid vehicles, retrieving first information concerning a location of a charging port 20 on a vehicle 10, retrieving second information concerning a position of the charging station 30 with respect to the identified parking spot, and retrieving third information concerning a length of a charging cable 32 of the charging station 30. The first information may be retrieved from a memory 704 of a driver assistance system 700, the second information may be retrieved from a navigation system 102 of the vehicle 10 and/or from a cloud 500 (generally available "Point of Interest" information), and the third information may be retrieved from a navigation system 102 of the vehicle 10 and/or from a cloud 500 (generally available "Point of Interest" information), for example. If the third information cannot be retrieved from the navigation system 102 and the cloud 500, a default value may be used instead. Based on the first, second, and third information, one or more suitable positions of the vehicle 10 on the identified parking spot with respect to the charging station 30 are determined that allow the vehicle 10 to be connected to the charging station 30 by means of the charging cable 32. At least one of the one or more suitable positions of the vehicle 10 is presented to a driver of the vehicle 10. This presentation may comprise presenting a generic top view of the identified parking spot and a proposed end orientation of the vehicle 10 on the identified parking spot. The method generally does not require any user input.

A method according to further embodiments of the disclosure comprises, in response to identifying a parking spot with a charging station 30 for electric or hybrid vehicles, retrieving first information concerning a location of a charging port 20 on a vehicle 10, retrieving second information concerning a position of the charging station 30 with respect to the identified parking spot, and retrieving third information concerning a length of a charging cable 32 of the charging station 30. Retrieving the first information may comprise retrieving the first information from a memory 704 of a driver assistance system 700, and retrieving the third information may comprise retrieving the third information from a navigation system 102 of the vehicle 10 and/or from a cloud 500 (generally available "Point of Interest" information). If the third information cannot be retrieved from the navigation system 102 or the cloud 500, a default value may be used instead. In this further embodiment, retrieving the second information may comprise capturing one or more images of a surrounding environment of the vehicle 10 by means of a surround view camera system 104, and determining the position of the charging station 30 with respect to the identified parking spot by processing the one or more images of the surrounding environment of the vehicle 10. Based on the first, second, and third information, one or more suitable positions of the vehicle 10 on the identified parking spot with respect to the charging station 30 that allow the vehicle 10 to be connected to the charging station 30 by means of the charging cable 32 are determined. At least one of the one or more suitable positions of the vehicle 10 is presented to a driver of the vehicle 10. This presentation may comprise a generic top view of the identified parking spot and a proposed end orientation of the vehicle 10 on the identified parking spot. The information presented to the driver, however, may also comprise providing specific guidance as to how to park the vehicle 10 on the parking spot in the suggested position. For example, trajectories may be illustrated on a display 40 in order to guide the driver of the vehicle 10. Surround view images captured by the surround view camera system 104 may be suitably processed and rendered in order to present a current position of the vehicle 10 with respect to the charging station 30 and to the charging cable 32 in real-time, for example. Optionally, the method may further comprise selecting a specific parking spot, similar to what is described with respect to Figure 7 above. That is, user input may (optionally) be required.

A parking spot may be identified in response to a user input, for example. It is, however, also possible for a parking spot to be identified automatically, e.g., when it is detected that the vehicle 10 is reaching its final destination, or when the vehicle speed is reduced within a defined range of a charging station 30, or when the vehicle 10 is determined to have left public roads and is within a defined range of a charging station 30, for example. Such information may be retrieved from a navigation system 102 of the vehicle 10, for example (GPS position of vehicle 10 and "Point of Interest" data available from navigation system 102).

It may be understood, that the illustrated systems and methods are merely examples. While various embodiments of the invention have been described, it will be apparent to those of ordinary skill in the art that many more embodiments and implementations are possible within the scope of the invention. In particular, the skilled person will recognize the interchangeability of various features from different embodiments. Although these techniques and systems have been disclosed in the context of certain embodiments and examples, it will be understood that these techniques and systems may be extended beyond the specifically disclosed embodiments to other embodiments and/or uses and obvious modifications thereof. Accordingly, the invention is not to be restricted except in light of the attached claims and their equivalents.

The description of embodiments has been presented for purposes of illustration and description. Suitable modifications and variations to the embodiments may be performed in light of the above description or may be acquired from practicing the methods. The described arrangements are exemplary in nature, and may include additional elements and/or omit elements. As used in this application, an element recited in the singular and proceeded with the word "a" or "an" should be understood as not excluding plural of said elements, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects. The subject matter of the present disclosure includes all novel and non-obvious combinations and sub-combinations of the various systems and configurations, and other features, functions, and/or properties disclosed. The following claims particularly point out subject matter from the above disclosure that is regarded as novel and non-obvious.

## Claims

1. A method comprising
in response to identifying a parking spot having a charging station (30) for electric or hybrid vehicles, retrieving first information concerning a location of a charging port (20) on a vehicle (10), retrieving second information concerning a position of the charging station (30) with respect to the identified parking spot, and retrieving third information concerning a length of a charging cable (32) of the charging station (30);
based on the first, second, and third, information, determining one or more suitable positions of the vehicle (10) on the identified parking spot with respect to the charging station (30) that allow the vehicle (10) to be connected to the charging station (30) by means of the charging cable (32); and
presenting at least one of the one or more suitable positions of the vehicle (10) to a driver of the vehicle (10).

2. The method of claim 1, wherein presenting at least one of the one or more suitable positions of the vehicle (10) to a driver of the vehicle (10) comprises displaying the at least one of the one or more suitable positions of the vehicle (10) on a display (40).

3. The method of claim 1 or 2, wherein retrieving the first information comprises retrieving the first information from a memory (704) of a driver assistance system (700).

4. The method of any of claims 1 to 3, wherein retrieving the third information comprises retrieving the third information from a navigation system (102) of the vehicle (10) and/or from a cloud (500).

5. The method of any of claims 1 to 3, wherein retrieving the third information comprises retrieving a default value from a memory (704) of a driver assistance system (700).

6. The method of any of the preceding claims, wherein the third information further comprises at least one of:
a location of the charging station (30),
a type of a connector (322) of the charging station (30), and
a maximum power provided by the charging station (30).

7. The method of any of the preceding claims, wherein retrieving the second information comprises at least one of
retrieving the second information from a navigation system (102) of the vehicle (10) and/or from a cloud (500); and
capturing one or more images of a surrounding environment of the vehicle (10) by means of a surround view camera system (104), and determining the position of the charging station (30) with respect to the identified parking spot by processing the one or more images of the surrounding environment of the vehicle (10).

8. The method of any of the preceding claims, wherein identifying a parking spot comprises
in response to determining available parking spots, presenting the one or more available parking spots to a driver of the vehicle (10); and
receiving an input of the driver concerning a parking spot selected by the driver.

9. The method of claim 8, wherein presenting the one or more available parking spots to a driver of the vehicle (10) further comprises presenting information to the driver as to which charging station provider the one or more available parking spots are served by.

10. The method of claim 8, wherein determining available parking spots comprises
determining a current location of the vehicle (10);
based on the current location of the vehicle (10), determining whether the vehicle (10) is within a defined range of one or more charging stations (30), wherein each of the one or more charging stations serves one or more parking spots;
capturing one or more images of a surrounding environment of the vehicle (10);
processing the one or more images of the surrounding environment of the vehicle (10) and identifying available parking spots having the one or more charging stations (30).

11. A driver assistance system (700) for an electric or hybrid vehicle (10) comprises a controller (702), the controller (702) being configured to:
in response to identifying a parking spot with a charging station (30) for electric or hybrid vehicles, retrieve first information concerning a location of a charging port (20) on the vehicle (10), retrieve second information concerning a position of a charging station (30) with respect to the identified parking spot, and retrieve third information concerning a length of a charging cable (32) of the charging station (30);
based on the first, second, and third information, determine one or more suitable positions of the vehicle (10) on the identified parking spot with respect to the charging station (30) that allow the vehicle (10) to be connected to the charging station (30) by means of the charging cable (32); and
present at least one of the one or more suitable positions of the vehicle (10) to a driver of the vehicle (10).

12. The driver assistance system (700) of claim 11, further comprising a memory (704), wherein the first information is stored in the memory (704) of the driver assistance system (700).

13. The driver assistance system (700) of claim 11 or 12, wherein the controller (702) is further configured to retrieve the third information from a navigation system (102) of the vehicle (10) and/or from a cloud (500).

14. The driver assistance system (700) of any of claims 11 to 13, wherein at least one of
the controller (702) is configured to retrieve the second information from a navigation system (102) of the vehicle (10) and/or from a cloud (500); and
the driver assistance system (700) further comprises or is connected to a surround view camera system (104), wherein retrieving the second information comprises capturing one or more images of a surrounding environment of the vehicle (10) by means of the surround view camera system (104) and determining the position of the charging station (30) with respect to the identified parking spot by processing the one or more images of the surrounding environment of the vehicle (10).

15. The driver assistance system (700) of any of claims 11 to 13, further comprising or being connected to a display (40), wherein presenting at least one of the one or more suitable positions of the vehicle (10) to a driver of the vehicle (10) comprises displaying the at least one of the one or more suitable positions of the vehicle (10) on the display (40).
